# EUROPEAN PATENT APPLICATION

(11) **EP 1 353 312 A1**
(43) Date of publication of application: **15.10.2003**
(21) Application number: 03252100.7
(22) Date of filing: 02.04.2003
(51) Int. Cl.: G09G 3/02, G09G 3/00

(54) **Active display screen whereby each pixel comprises an optical receiver and a light emitter**

(30) Priority: 10.04.2002 US 120945
(71) Applicant: Hewlett-Packard Company, Palo Alto, CA 94304 (US)
(72) Inventor: Da Cunha, John M., Corvallis, OR 97330 (US); Allen, William J., Corvallis, OR 97333 (US)
(74) Representative: Jackson, Richard Eric

(57) **Abstract**

A system (10, 30, 52, 64, 74) for displaying images (16) on an active display (14) is provided. The system (10, 30, 52, 64, 74) includes an image information source (18) configured to project optical image information (20, 34, 58, 60, 62), a plurality of display elements (22, 40, 42, 44, 84, 86, 88), and a plurality of receiving elements (46, 90, 92, 94) associated with the display elements (22, 40, 42, 44, 84, 86, 88), the plurality of receiving elements (46, 90, 92, 94) being configured to receive the image information (20, 34, 58, 60, 62), from the image information source (18) and further configured to activate the associated display elements (22, 40, 42, 44, 84, 86, 88) according to the image information (20, 34, 58, 60, 62).

## Description

### BACKGROUND OF THE INVENTION

Various display systems have been used over the years to generate images. For example, both front projection systems and rear projection systems are used today to display images. Such display systems may employ image devices, such as cathode ray tubes (CRTs), liquid crystal displays (LCDs), or electrically-addressed emissive displays, e.g. plasma displays. The display systems further may incorporate a passive display screen or an active display screen.

The marketability of each display system may depend on numerous factors. Specifically, the quality of the image generated by the display system often is important to consumers. For example, consumers typically prefer a display system that can generate clear, bright images. However, in some display systems, image artifacts may affect the quality of the image. Moreover, some systems require expensive projection equipment to generate a clear, bright image. Display systems that employ passive screens, for example, may require costly projection equipment configured to supply sufficient optical energy to display images. Correspondingly, active display screens may require use of extensive and complex addressing schemes and control circuits.

### SUMMARY OF THE INVENTION

A system for displaying images on an active display is provided. The system includes an image information source configured to project image information, a plurality of display elements, and a plurality of receiving elements associated with the display elements, the receiving elements being configured to receive the image information from the image information source and to activate the associated display elements according to the image information.

### DESCRIPTION OF THE DRAWINGS

Fig. 1 is a schematic diagram of an optically-addressed display system wherein a light engine projects image information onto a display screen according to one embodiment of the present invention.
Fig. 2 is a schematic diagram of an optically-addressed display system showing a laser scanning a display screen according to another embodiment of the present invention.
Fig. 3 is a schematic diagram of a portion of an optically-addressed display screen for the display system illustrated in Fig. 2.
Fig. 4 is a schematic diagram of an optically-addressed display system wherein a light source generates a plurality of wavelengths, which are directed onto a display screen according to an embodiment of the present invention.
Fig. 5 is a schematic diagram of an optically-addressed display system wherein a plurality of wavelengths generated via a wavelength separator are directed onto a display screen according to an embodiment of the present invention.
Fig. 6 is a schematic diagram of an optically-addressed display system wherein a plurality of wavelengths generated via a wavelength separator are directed onto a display screen according to an embodiment of the present invention.
Fig. 7 is a schematic diagram of a portion of an optically-addressed display screen showing a first wavelength of light stimulating a corresponding receiver, and thereby, activating an associated emitter.
Fig. 8 is a schematic diagram of a portion of an optically-addressed display showing a second wavelength of light stimulating a corresponding receiver, and thereby, activating an associated emitter.

### DETAILED DESCRIPTION OF THE PREFERRED EMBODIMENT

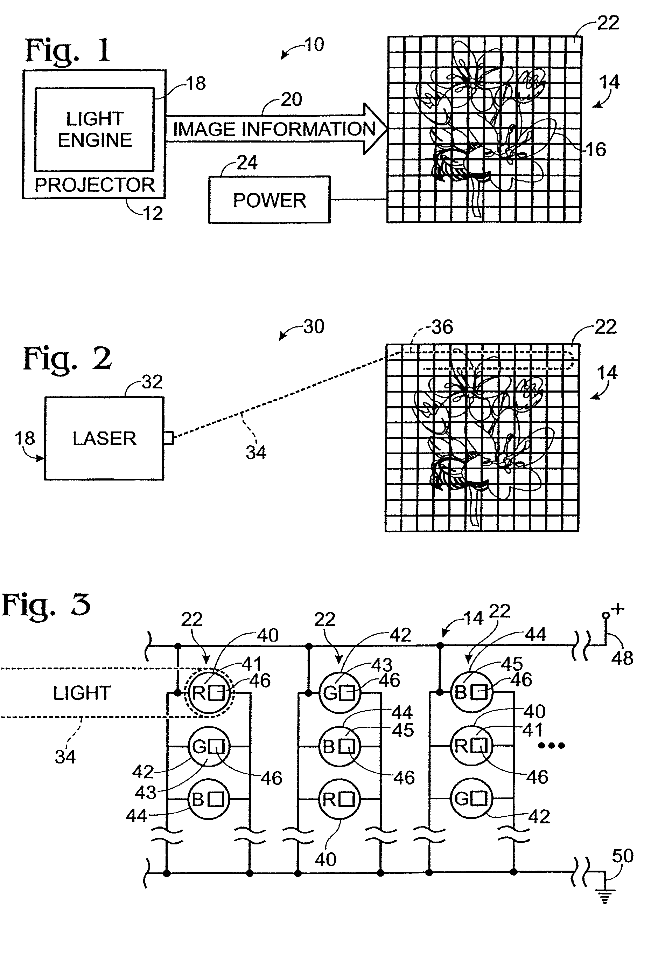

Referring initially to Fig. 1, a display system according to an embodiment of the present invention is shown generally at 10. Specifically, Fig. 1 illustrates, schematically, a display system including a projector 12 and an optically-addressed display screen 14, wherein the projector is adapted to project image information onto the display screen.

Display system 10 may take the form of a projection system, such as a rear projection system, a front projection system, or some other suitable projection system. These display systems may have different configurations. For example, in a front projection system, the viewer typically is located on the same side of the screen as the projector and the projector is spaced-apart and separate from the screen. Alternatively, in a rear projection display system, an image is visible by a viewer situated on the opposite side of the screen from the projector and the projector and the screen typically are integrated in a single unit.

Projector 12 typically includes a light engine 18. Light engine 18 is adapted to direct and transmit optical image information 20 to screen 14. Optical image information 20, as used herein, includes light adapted to generate an image, wherein the light may be visible and/or invisible light. For example, and as described in more detail below, light engine 18 may be any suitable illumination source adapted to optically address screen 14, including single light sources such as a mercury lamp, a laser, etc., and/or multiple light sources such as light emitting diodes (LEDs), etc. The light generated by these light sources may be transmitted and/or projected onto screen 14. Additionally, projector 12 may include optics, spatial light modulators, focusing devices, color-generation devices, controllers, etc.

Typically, display screen 14 includes a plurality of display elements 22 capable of controlling light to form images on the display screen. For example, display elements 22 may be activated to produce image 16. Display elements, as used herein, are image-forming units of screen 14 whether composed of emissive components, reflective components or transmissive components. Typically, the display elements are capable of producing light within the visible-light spectrum. Display elements may include, but are not limited to, pixels, groups of pixels, sub-pixels, groups of sub-pixels, etc. Furthermore the display screen may be a generally planar sheet, as shown, but may take virtually any form, and thus is also referred to as a display surface herein.

Power 24 may be supplied directly to screen 14 and/or to display elements 22. Screen 14 may be an active display screen having a plurality of transistors and capacitors, such as thin film transistors (TFTs), which control the activation of display elements 22. Alternatively, other types of display screens may be used that incorporate display elements 22.

Generally, in operation, image information 20 is directed to screen 14 and the associated display elements 22. Image information 20 may be directed to receiving elements on screen 14, which are selectively stimulated to activate respective associated display elements on the screen, thereby forming an image on the screen. It further should be noted that projector 12 may raster, or repetitively scan, screen 14 such that image information 20 is successively communicated to individual receiving elements. Alternatively, depending on the configuration of the display system, image information 20 may be simultaneously sent to multiple receiving elements.

One particular embodiment of the present invention is illustrated schematically in Fig. 2. Specifically, a display system 30 is illustrated, including a light engine 18 and a display screen 14. As indicated, light engine 18 may include a laser 32 or other suitable single beam or multiple beam light source. Laser 32 may be any suitable type of light source capable of producing a narrow beam of light. As illustrated, laser 32 emits a laser beam 34 (also referred to as a light beam or light) that is directed onto screen 14. Laser beam 34 addresses screen 14 by directing image information toward receiving elements on screen 14.

As discussed above, screen 14 typically includes a plurality of display elements 22, each with an associated receiving element. Laser beam 34 may be scanned across screen 14 so as to individually and selectively stimulate the receiving elements, and correspondingly, to activate the respective associated display elements. For example, laser beam 34 may raster-scan the screen, as indicated at 36. Raster-scan, as used herein, includes both horizontal and vertical scanning. Thus a raster-scan may include optically addressing the screen from side to side and/or from top to bottom.

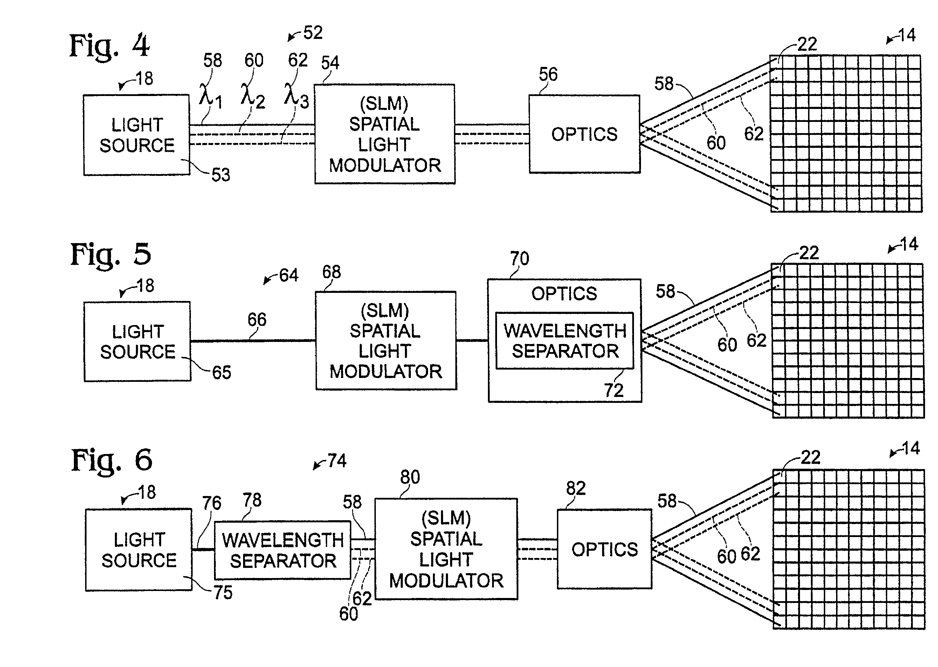

Fig. 3 further illustrates addressing of screen 14. As described above, and shown in Figs. 1 and 2, screen 14 includes a plurality of display elements 22. It should be appreciated that a display element may include a single color component or a plurality of color components as shown here. Similarly, each display element may include a single receiver, or plural receivers, whether or not plural color components are employed.

In Fig. 3, each display element includes three different-color color components. Thus, as illustrated in Fig. 3, screen 14 may include a plurality of red color components 40 (designated "R") with red light emitters 41, green color components 42 (designated "G") with green light emitters 43, and blue color components 44 (designated "B") with blue light emitters 45. Other-color color components with associated other-color light emitters are possible, including, but not limited to, yellow color components, white color components, etc. Furthermore, although light emitters are referenced here, color components may be emissive components, reflective components, and/or transmissive components.

The color components typically are arranged in columns and rows where each color component is adjacent a different-color color component. Thus, a blue color component may be positioned between a red color component and a green color component. For example, in Fig. 3, the blue color component situated in the center of the three-by-three matrix is horizontally adjacent a green color component and a red color component. Moreover, the same blue color component is vertically adjacent a second green color component and a second red color component. It further should be noted that each of the color components typically are positioned in close proximity to others over the entire surface of display screen 14 to improve the clarity and brightness of the display. Although described in reference to three single-color color components, one skilled in the art should appreciate that the invention is not so limited, and that other configurations and arrangements of color components are possible.

As indicated in Fig. 3, each display element is associated with an optical receiver configured to receive image information projected from light engine 18. Optical receiver, as used herein, includes a receptor or other device that is configured to receive incoming light, either visible or invisible, and is selectively stimulated by such light to activate one or more associated display elements. In Fig. 3, each color component 40, 42, 44 includes both an emitter 41, 43, 45 and an associated optical receiver 46. However, in some embodiments, a single receiver may be coupled with multiple color components and/or multiple display elements.

Receivers 46 are typically photoreceivers that are configured to receive optical image information from light engine 18. For example, receivers 46 may take the form of a photodiode or light-receiving diode (LRD), such as an infrared LRD or visible-spectrum LRD. Alternatively, receivers 46 may be phototransistors or other types of optoelectronic devices. In the illustrated embodiment of Fig. 3, receivers 46 are adapted to receive information from laser 32. The type of receivers 46 depends on the type and configuration of the light source.

The arrangement of the receivers may depend on the configuration of the display system. Thus, in a rear projection display system, where a viewer is on the opposite side of the screen from the projector, receivers 46 are also typically on the backside of the screen from the viewer. Similarly, in a front projection display system, where the projector and viewer are on the same side of the screen, the receivers may be oriented on the front side of the screen. Thus, the receivers are oriented such that they may receive image information from the light engine.

The emitters and/or the receivers may be coupled with a power supply 48 and a ground 50 such that electric power is provided to the emitters and/or receivers. In response to receiving image information, a receiver may be stimulated to cause an emitter to be activated to produce colored light, typically within the visible light spectrum. For example, if an associated receiver of a red color component receives optical image information, then the red emitter element may be activated to produce red light. The amount of light or the intensity of light produced by each emitter may be regulated by controlling the stimulation of receiver 46. Thus, by controlling stimulation of receiver 46, the display elements may be selectively activated to change image color, image brightness, etc.

In operation, laser 32 directs a laser beam 34 towards display screen 14. Laser beam 34 typically is narrow enough to individually impinge on each receiver. For example, in Fig. 3, laser beam 34 is shown schematically impinging on a single receiver. As laser beam 34 scans the display screen, the laser beam may be selectively modulated. When the modulated signal strikes a receiver 46, the receiver may be selectively stimulated (e.g. based on frequency or intensity of the beam) so as to activate the corresponding display element emitter.

In some embodiments, the laser may be modulated by rapidly turning the laser beam on and off as indicated above. By pulsing the laser in this fashion, receivers may be selectively stimulated, thereby causing emitters of individual display elements to be activated and deactivated in accordance with the image information. Thus, by pulsing the laser, it is possible to produce a change in the color and/or light intensity of the display elements to produce or change an image on screen 14. In other embodiments, the light source may use two different frequencies of laser light with the light beam, varied intermittently between a first frequency and a second frequency.

The laser and/or other light source typically may be directly focused onto screen 14. An imaging device, such as a liquid crystal display imager or a digital micromirror device (DMD), thus is not necessary in the display system. By directly focusing the laser beam onto the screen, image information may be transmitted directly to screen 14 and each individual display element may be controlled by modulating the laser as it scans the screen.

Figs. 4-8 illustrate various systems and methods of optically addressing screen 14. Referring initially to Fig. 4, a multiple-wavelength display system is shown generally at 52. Multiple-wavelength display system 52 includes a light engine 18 in the form of multiple wavelength-producing light source 53, a spatial light modulator (SLM) 54, optics 56, and a display screen 14. As illustrated, light source 53 may be adapted to generate a plurality of different wavelengths of light. Specifically, light source 53 may include multiple light beam producers, including multiple lamps, lasers, etc. In the illustrated embodiment, light source 53 is configured to produce a first wavelength of light (λ₁), also indicated at 58 and shown in solid lines, a second wavelength of light (λ₂), also indicated at 60 and shown in dashed lines, and a third wavelength of light (λ₃), also indicated at 62 and shown in dash-dot lines. It should be noted that although only three wavelengths are discussed and illustrated, any number of wavelengths may be generated by light source 53.

Each wavelength of light is directed through system 52 onto screen 14. In exemplary system 52, each wavelength 58, 60, and 62 may be sequentially directed onto spatial light modulator 54. Alternatively, each wavelength may be simultaneously directed onto spatial light modulator 54. Spatial light modulator (SLM) may be any suitable light modulating device, such as a micromirror array (e.g., digital micromirror device (DMD), etc.). Each modulated wavelength is then passed through optics 56. Typically, optics 56 include a projection lens adapted to focus each wavelength onto display screen 14.

Each wavelength of light may be focused onto display screen 14 so as to stimulate any number of receiving elements depending on the arrangement of the receiving elements on the display screen. It should be noted that each receiving element may be adapted to be stimulated by a particular wavelength generated by light source 53. Thus, an individual display element may be activated independent of other display elements.

It should be appreciated that although Figs. 4-6 illustrate the use of spatial light modulators and optics, other projection configurations may be used. For example, each wavelength may be produced via a laser or other light source, and then scanned across screen 14. In other words, the light source may directly project light onto screen 14. Thus, each wavelength may be scanned across screen 14 such that different display elements are addressed at each moment of time. Alternatively, a plurality of display elements may be addressed simultaneously by a single wavelength or by multiple wavelengths.

Fig. 5 illustrates another embodiment of a multiple-wavelength display system, indicated generally at 64. In the depicted system 64, light engine 18 is illustrated as a single-beam light source 65 configured to generate light beam 66. Beam 66 is directed onto SLM 68. Modulated beam 66 is then passed through optics 70. Optics 70 may include a wavelength separator 72 adapted to split beam 66 into a plurality of wavelengths. For example, in the illustrated embodiment, wavelength separator 72 breaks beam 66 into three different wavelengths 58, 60, 62. Each wavelength is then directed to screen 14. It should be noted that although only three wavelengths of light are illustrated, wavelength separator 72 may divide beam 66 into any number of different wavelengths. Also, it will be appreciated that wavelength separator 72 may be any device that is capable of separating a single beam of light into multiple beams having different wavelengths of light. For example, in some configurations, wavelength separator 72 may include a beam splitter, an absorption wheel, etc.

Another alternative embodiment of a multiple-wavelength display system is illustrated at 74 in Fig. 6. Specifically, in Fig. 6, light engine 18 is illustrated as a single beam light source 75 configured to generate a light beam 76, which is directed through a wavelength separator 78. As with the wavelength separator discussed above in regard to Fig. 5, wavelength separator 78 of Fig. 6 may be adapted to separate light beam 76 into a plurality of wavelengths of light, 58, 60, 62. Each wavelength of light produced via wavelength separator 78 is directed onto SLM 80 through optics 82 to screen 14 as illustrated in Fig. 6. Although three wavelengths of light are illustrated, wavelength separator 78 may divide beam 76 into any number of different wavelengths.

As with system 52 illustrated in Fig. 4, each of the different wavelengths of light produced via system 64 in Fig. 5, or system 74 in Fig. 6, may correspond to one or more receivers associated with one or more display element 22. Thus, each different wavelength may stimulate a different set of receiving elements to activate different display elements. By selectively modulating the different wavelengths of light impinging on each receiving element, color images may be displayed on screen 14.

It should be noted that the different wavelengths generated in display systems 52, 64, and 74 may be dependent on the receivers associated with the display elements. It further should be noted that each receiver may be configured to be stimulated by any number of specific wavelengths or wavelength ranges. For example, in some embodiments, the receivers may be configured to be stimulated by wavelengths that are not in the visible part (approximately 400-700 nanometers) of the light spectrum. Typically such receivers are configured to receive light in ultraviolet or infrared parts of the light spectrum. In such embodiments, the wavelengths of light projected from light source 18 to screen 14 would be invisible to a viewer.

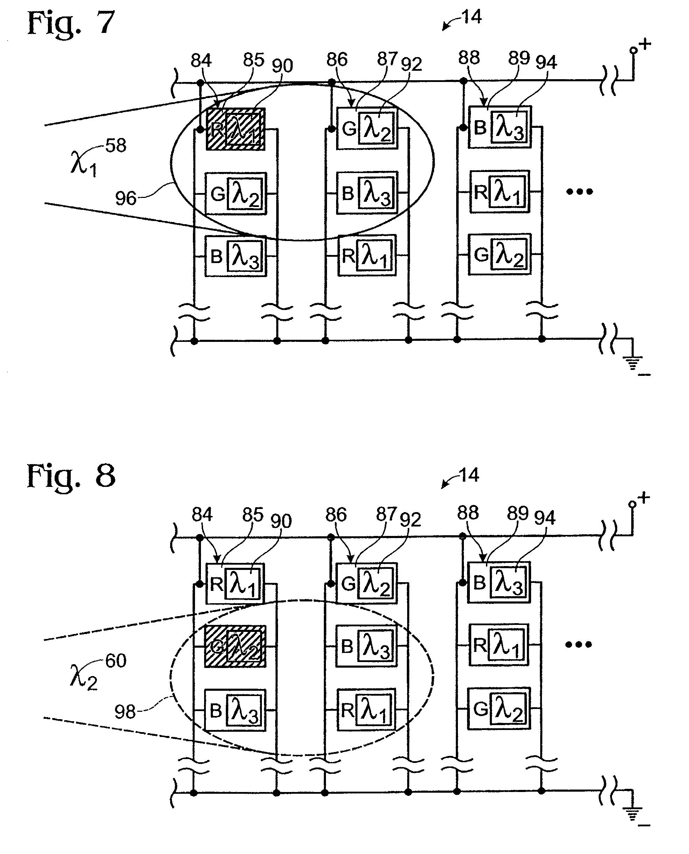

Operation of the systems, illustrated in Figs. 4-6, and discussed above, is further illustrated in Figs. 7 and 8. As described above, display screen 14 includes a plurality of display elements. Each display element may be a single color component or plural color components, including, but not limited to red color components, green color components, blue color components, yellow color components, white color components, etc. Each color component includes a color-light producing element. For example, in Figs. 7 and 8, screen 14 includes a plurality of red color components 84 with red emitters 85, green color components 86 with green emitters 87, and blue color components 88 with blue emitters 89. Other embodiments may employ reflective color components, or transmissive color components.

In the depicted embodiment, each color component includes a receiver configured to receive specified stimulating light. As indicated, each receiver may be associated with a corresponding emitter to make up a color component. Thus, as illustrated, each red emitter 84 is associated with a corresponding receiver 90, each green emitter 86 is associated with a corresponding receiver 92, and each blue emitter 88 is associated with a corresponding receiver 94.

As a non-limiting example, receivers 90 may be configured to receive wavelengths between 1000-1100 nanometers, receivers 92 may be configured to receive wavelengths between 1150-1250 nanometers, and receivers 94 may be configured to receive wavelengths between 1300-1400 nanometers. Each, in turn, may thus be stimulated to activate corresponding red, green and blue emitters, respectively. As an alternative non-limiting example, receivers 90 may stimulated by wavelengths of approximately 350 nanometers, while receivers 92 may be stimulated by wavelengths of approximately 300 nanometers, and receivers 94 may be stimulated by wavelengths of approximately 250 nanometers. Each wavelength and/or wavelength range is for exemplary purposes only, and is not intended to limit the invention in any way. It further should be noted that the exemplary wavelength ranges are in the ultraviolet and infrared range of the light spectrum, however, the receivers may be configured to receive wavelengths in other parts of the light spectrum, including the visible part of the light spectrum.

In operation, the different wavelengths of light directed onto screen 14 operate to stimulate different receivers, which, in turn, activate corresponding display elements. Each color component of a display element may be controlled by varying the wavelengths of light directed towards a specific portion of the display. For example, in Fig. 7, light 58 of a first wavelength λ₁ is directed onto a portion 96 of display screen 14. In the present illustration, light 58 corresponds to the receivable range of wavelengths that stimulates λ₁ receiver 90. Thus, light 58 stimulates a first set of receivers, namely, each λ₁ receiver within field 96. Stimulation of each receiver results in activation of the corresponding display element as described above. Therefore, in Fig. 7, when light 58 is directed onto screen 14, each λ₁ receiver within field 96 is stimulated, activating the respective red emitter 85. Activated display elements are indicated by hash marks. It should be appreciated that although only one display element is shown activated, any number of display elements coupled with the stimulated receiver may be activated. Furthermore, the light 58 may stimulate more than one receiver, and each receiver may activate one or more display element.

Similarly, in Fig. 8, light 60 of a second wavelength λ₂ (having a different wavelength than the first wavelength λ₁) may be directed toward screen 14. This may occur either successively or simultaneously with directing light 58 toward display screen 14. Light 60 corresponds to the receivable range of wavelengths that stimulate receiver 92. Thus, light 60 stimulates a second set of receivers, namely, each λ₂ receiver 92 within field 98. Accordingly, the corresponding green emitters 87 are activated by light 60. None of the other display elements in field 98 are activated because none of the other receivers within field 98 are simulated by light 60.

As discussed above, each wavelength may be successively and/or simultaneously directed onto screen 14 depending on the configuration of the display system. Specifically, a spatial light modulator may concurrently direct multiple light beams towards the screen, thereby addressing the entire screen at one time. For example, the entire screen may be addressed concurrently by directing multiple light beams of a first wavelength onto the entire screen, followed by multiple light beams of a second wavelength, etc. Alternatively, only a portion of the screen may be addressed at any one moment in time. In such an embodiment, each wavelength of light may be scanned across the screen such that the entire screen is addressed in sequence.

The arrangement of the color components may affect the quality of the display. Depending on the size and location of the light beam on the display, different sets of receivers may be simulated, and different groups of color components may be activated. By staggering the color components, such that each color component is adjacent a different-color color component, more precise control of the display may be possible. For example in Fig. 7, although the beam of light extends beyond red color component 84, it only stimulates receiver 90, and thus only activates red color component 84. This arrangement of the display elements enables a larger beam of light to be used and obviates the necessity for precise alignment of the light with individual receivers.

Accordingly, as set forth above, a method for displaying images on a screen is provided which includes providing a plurality of receiving elements and display elements on a screen, each display element being associated with at least one receiving element, providing an image information source configured to project optical image information onto the receiving elements, directing projection of optical image information from the image information source to the receiving elements to selectively stimulate the receiving elements based on the optical image information, and directing activation of display elements corresponding to the stimulated receiving elements in accordance with the optical image information to produce an image. As will be appreciated, directing projection of optical image information may include directing a modulated light beam onto the screen, typically by scanning the screen with the modulated light beam. Alternatively, directing projection of optical image information may include selectively projecting a plurality of different wavelengths of light onto the screen, the different wavelengths of light being effective to stimulate different sets of receiving elements.

In one embodiment, a screen having a plurality of color components is provided, each color component being coupled with at least one receiver. A laser beam, or some other light beam, thus may be scanned across the screen to selectively stimulate receivers on the screen, thereby activating corresponding color components on the screen to generate an image. The laser beam may be aligned to avoid simultaneous stimulation of multiple receivers, and modulated to selectively stimulate individual receivers. Scanning of the laser beam may occur by row, by column, or by some other convention.

A display also may be provided which has a plurality of display elements, including a first set of display elements coupled with a first set of receiving elements, a second set of display elements coupled with a second set of receiving elements, and a third set of display elements coupled with a third set of receiving elements. Such an active display may be optically addressed by producing a plurality of different wavelengths of light, including a first wavelength of light, a second wavelength of light, and a third wavelength of light, each directed onto the display. The first wavelength of light thus may be selectively modulated to effect selected stimulation of the first set of receiving elements, thereby activating display elements of the first set of display elements upon stimulation of corresponding first receiving elements by the first wavelength of light. The second wavelength of light similarly may be selectively modulated to effect selected stimulation of the second set of receiving elements, thereby activating display elements of the second set of display elements upon stimulation of corresponding second receiving elements by the second wavelength of light. The third wavelength of light may be selectively modulated to effect selected stimulation of the third set of receiving elements, thereby activating display elements of the third set of display elements upon stimulation of corresponding third receiving elements by the third wavelength of light. The plural wavelengths of light may be directed onto the display successively or simultaneously.

While various alternative embodiments and arrangements of a method and system for optically addressing an active screen have been shown and described above, it will be appreciated by those of skill in the art that numerous other embodiments, arrangements, and modifications are possible and are within the scope of the invention. In other words, those skilled in the art will understand that many variations may be made therein without departing from the spirit and scope of the invention as defined in the following claims. The description of the invention should be understood to include all novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application. Where the claims recite "a" or "a first" element or the equivalent thereof, such claims should be understood to include incorporation of one or more such elements, neither requiring, nor excluding two or more such elements.

## Claims

1. An active display system (10, 30, 52, 64, 74) comprising: an image information source 18 configured to project optical image information (20, 34, 58, 60, 62) onto a display (14); a plurality of display elements (22, 40, 42, 44, 84, 86, 88); and a plurality of receiving elements (46, 90, 92, 94) associated with the display elements (22, 40, 42, 44, 84, 86, 88), the receiving elements (46, 90, 92, 94) being configured to receive the optical image information (20, 34, 58, 60, 62) from the image information source (18) and being further configured to activate the associated display elements (22, 40, 42, 44, 84, 86, 88) according to the optical image information (20, 34, 58, 60, 62).

2. The active display system (10, 30, 52, 64, 74) of claim 1, wherein the image information source (18) is a laser (32) having a laser beam (34) adapted to communicate optical image information (20, 34, 58, 60, 62) to the receiving elements (46, 90, 92, 94) and wherein the laser (32) is configured to modulate the laser beam (34) in accordance with the optical image information (20, 34, 58, 60, 62) as the laser beam (34) scans the display (14) to selectively stimulate receiving elements (46, 90, 92, 94) on the display, thereby activating and deactivating associated display elements (22, 40, 42, 44, 84, 86, 88), in accordance with the optical image information (20, 34, 58, 60, 62).

3. The active display system (10, 30, 52, 64, 74) of claim 1, wherein the image information source (18) is further configured to direct at least a first wavelength of light (58) and a second wavelength of light (60) onto the display (14), wherein a first set (90) of receiving elements are stimulated by the first wavelength of light (58) and a second set (92) of receiving elements are stimulated by the second wavelength of light (60).

4. A method for displaying images (16) on a screen (14), the method comprising: providing a plurality of receiving elements (46, 90, 92, 94) and display elements (22, 40, 42, 44, 84, 86, 88) on a screen (14), each display element (22, 40, 42, 44, 84, 86, 88) being associated with at least one receiving element (46, 90, 92, 94); providing an image information source (18) configured to project optical image information (20, 34, 58, 60, 62) onto the receiving elements (46, 90, 92, 94); directing projection of optical image information (20, 34, 58, 60, 62) from the image information source (18) to the receiving elements (46, 90, 92, 94) to selectively stimulate the receiving elements (46, 90, 92, 94) based on the optical image information (18); and directing activation of display elements (22, 40, 42, 44, 84, 86, 88) corresponding to the stimulated receiving elements (46, 90, 92, 94) in accordance with the optical image information (20, 34, 58, 60, 62) to produce an image (16).

5. A display system (30) comprising: a display screen (14) having a plurality of receivers (46) and a plurality of emitters (41, 43, 45) wherein each emitter (41, 43, 45) is associated with at least one receiver (46); and a laser (32) configured to produce a beam (34) modulated in accordance with image information (20), wherein the laser (32) is configured to scan (36) the display (14) and selectively stimulate the receivers (46) in accordance with such image information (20), thereby activating corresponding emitters (41, 43, 45) to produce an image (16) on the display screen (14).

6. An optically addressed display system (52, 64, 74) comprising: a display screen (14) including a plurality of light emitters (85, 87, 89), wherein each light emitter (85, 87, 89), is associated with a light receiver (90, 92, 94); and a projector (12) configured to selectively direct activating light (58, 60, 62) onto the light receivers (90, 92, 94); wherein a first group of light emitters (85, 87, 89), are configured to emit light upon associated light receivers (90, 92, 94) receiving activating light (58, 60, 62) of a first wavelength and a second group of light emitters (85, 87, 89), are configured to emit light upon associated light receivers (90, 92, 94) receiving activating light (58, 60, 62) of a second wavelength, different from the first wavelength.

7. A method of optically addressing a display, the method comprising: providing a screen (14) having a plurality of color components (40, 42, 44), wherein each color component (40, 42, 44) is coupled with at least one receiver (46); scanning (36) a laser beam (34) across the screen (14) to selectively stimulate receivers (46) on the screen (14); and activating corresponding color components (40, 42, 44) on the screen (14) to generate an image (16).

8. A method for optically addressing an active display, the method comprising: providing a display (14) having a plurality of display elements (22, 84, 86, 88), including a first set of display elements (84) coupled with a first set of receiving elements (90), a second set of display elements (86) coupled with a second set of receiving elements (92), and a third set of display elements (88) coupled with a third set of receiving elements (94); producing a plurality of different wavelengths (58, 60, 62) of light, including a first wavelength (58) of light, a second wavelength (60) of light, and a third wavelength (62) of light; directing the plurality of wavelengths (58, 60, 62) of light onto the display (14); selectively modulating the first wavelength (58) of light to effect selected stimulation of the first set of receiving elements (90); activating display elements of the first set of display elements (84) upon stimulation of corresponding first receiving elements (90) by the first wavelength of light (58); selectively modulating the second wavelength (60) of light to effect selected stimulation of the second set of receiving elements (92); activating display elements of the second set of display elements (86) upon stimulation of corresponding second set of receiving elements (92) by the second wavelength of light (60); selectively modulating the third wavelength (62) of light to effect selected stimulation of the third set of receiving elements (94); and activating display elements of the third set of display elements (88) upon stimulation of corresponding third receiving elements (94) by the third wavelength of light (62).

9. A projection device comprising: an active display screen (14) having a plurality of display elements (22, 40, 42, 44, 84, 86, 88), wherein each display element includes an emitter (41, 43, 45, 85, 87, 89) associated with a receiver (46, 90, 92, 94); and a projector (12) configured to project optical image information (20, 34, 58, 60, 62) onto the receivers (46, 90, 92, 94) of the display screen (14); wherein the emitters (41, 43, 45, 85, 87, 89) are selectively activated when the associated receiver (46, 90, 92, 94) receives corresponding optical image information (20, 34, 58, 60, 62) from the projector (12).

10. A display system (10, 30, 52, 64, 74) comprising: display means (14) having a plurality of light controllers (41, 43, 45, 85, 87, 89), each light controller (41, 43, 45, 85, 87, 89) being coupled with a receiver (46, 90, 92, 94); projecting means (18) for projecting image information (20, 34, 58, 60, 62) onto the display means (14), the projecting means (18) being configured for selected stimulation of receivers (46, 90, 92, 94) in accordance with the image information (20, 34, 58, 60, 62); and activating means for activating the light controllers (41, 43, 45, 85, 87, 89) associated with the stimulated receivers (46, 90, 92, 94) to generate an image (16).
